# EUROPEAN PATENT APPLICATION

(11) **EP 4 316 607 A1**
(43) Date of publication of application: **07.02.2024**
(21) Application number: 22795895.6
(22) Date of filing: 28.04.2022
(51) Int. Cl.: A62C 35/02, A62D 1/06

(54) **FIRE-EXTINGUISHING MEMBER AND PRODUCTION METHOD THEREFOR**

(30) Priority: 30.04.2021 JP 2021077949; 30.04.2021 JP 2021077953
(71) Applicant: TOPPAN INC., Tokyo 110-0016 (JP); Yamato Protec Corporation, Tokyo 108-0071 (JP)
(72) Inventor: SHODA, Ryo, Tokyo 110-0016 (JP); KUROKAWA, Masato, Tokyo 110-0016 (JP); TANABE, Junya, Tokyo 110-0016 (JP); TODE, Ryohei, Tokyo 110-0016 (JP); IKEDA, Takeshi, Tokyo 110-0016 (JP); TOMIYAMA, Shougo, Tokyo 108-0071 (JP); TSUTSUMI, Akimasa, Tokyo 108-0071 (JP)
(74) Representative: TBK
(86) International application number: PCT/JP2022/019306
(87) International publication number: WO 2022/230982

(57) **Abstract**

Disclosed is a method for producing a fire-extinguishing member, including steps of: preparing an adherend that has a surface to be treated; and forming a fire-extinguishing-agent-containing layer on the surface to be treated by a wet coating method to obtain a fire-extinguishing member that includes the adherend and the fire-extinguishing-agent-containing layer provided on the surface to be treated, wherein the fire-extinguishing-agent-containing layer contains a binder resin and a fire-extinguishing agent component that is combusted to generate an aerosol.

## Description

### Technical Field

The present disclosure relates to a fire-extinguishing member and a production method therefor. The fire-extinguishing member according to the present disclosure can be applied to industrial members such as building materials, automobile members, aircraft members, and electronic members.

### Background Art

In recent years, with the advancement of technology, our lives have become more and more comfortable. On the other hand, a large amount of energy is required to create such comfort, and a high degree of safety is required in situations such as filling and storing the energy at a high density, moving the energy, and using the energy.

Taking automobiles as an example, the danger of ignition and fire is present in a situation where fossil fuels for gasoline are mined, in a situation where fossil fuels are refined into gasoline, in a situation where fossil fuels are transported, or the like. Further, taking electronics as an example, the danger of ignition and fire is similarly present when electrical energy is transferred through a wire, when adjustment of electrical energy is performed at substations and transformers, when electrical energy is used in electrical appliances in homes and factories, when electrical energy is temporarily stored in storage batteries, or the like. Patent Literature 1 discloses a fire spread prevention structure in which a heat insulating material, a noncombustible material, and a flame retardant material are used as constituent members.

### Citation List

### Patent Literature

[Patent Literature 1] Japanese Patent No. 5317785

### Summary of Invention

### Technical Problem

Even if the fire spread prevention structure as described above is adopted, fire spreads to surrounding non-fire countermeasure members. Further, in a case where an explosion accompanies the ignition, the constituent members will break and fire will spread.

The present disclosure provides a fire-extinguishing member that includes an adherend having a surface to be treated and a fire-extinguishing-agent-containing layer provided on the surface to be treated, wherein the fire-extinguishing-agent-containing layer can exhibit an excellent fire-extinguishing effect and can curb the spread of fire by promoting initial fire-extinguishing at the time of fire, and a method for efficiently producing the same.

### Solution to Problem

A first aspect of the present disclosure relates to a production method for a fire-extinguishing member including: an adherend having a surface to be treated; and a fire-extinguishing-agent-containing layer provided on the surface to be treated, wherein the fire-extinguishing-agent-containing layer contains a binder resin and a fire-extinguishing agent component that is combusted to generate an aerosol. This production method includes steps of: preparing an adherend that has a surface to be treated in an uneven shape; and forming a fire-extinguishing-agent-containing layer on the surface to be treated by a wet coating method to obtain a fire-extinguishing member that includes the adherend and the fire-extinguishing-agent-containing layer provided on the surface to be treated, wherein the fire-extinguishing-agent-containing layer contains a binder resin and a fire-extinguishing agent component that is combusted to generate an aerosol.

A second aspect of the present disclosure relates to a production method for a fire-extinguishing member including: an adherend having a surface to be treated; a fire-extinguishing-agent-containing layer provided on the surface to be treated; and a protective layer provided on a surface of the fire-extinguishing-agent-containing layer, wherein the fire-extinguishing-agent-containing layer contains a binder resin and a fire-extinguishing agent component that is combusted to generate an aerosol. This production method includes steps of: preparing an adherend that has a surface to be treated in an uneven shape; forming a fire-extinguishing-agent-containing layer on the surface to be treated; and forming a protective layer on the fire-extinguishing-agent-containing layer to obtain a fire-extinguishing member that includes the adherend, the fire-extinguishing-agent-containing layer provided on the surface to be treated, and the protective layer provided on the fire-extinguishing-agent-containing layer, wherein the fire-extinguishing-agent-containing layer contains a binder resin and a fire-extinguishing agent component that is combusted to generate an aerosol, and wherein at least one of the fire-extinguishing-agent-containing layer and the protective layer is formed by a wet coating method.

In the present disclosure, the wet coating method may be a spray coating method or a dip coating method. In the present disclosure, the surface to be treated may have an uneven shape.

One aspect of the present disclosure relates to a fire-extinguishing member. This fire-extinguishing member includes: an adherend having a surface to be treated; and a fire-extinguishing-agent-containing layer provided on the surface to be treated, wherein the fire-extinguishing-agent-containing layer contains a binder resin and a fire-extinguishing agent component that is combusted to generate an aerosol. The adherend may be one of an injection-molded article and a press-molded article.

The fire-extinguishing member may further include a protective layer provided on a surface of the fire-extinguishing-agent-containing layer. A material of the protective layer may be at least one selected from the group consisting of polyolefin, polyester, fluororesin, polyvinyl chloride, polyvinyl alcohol, acrylic resin, epoxy resin, polyamide, polyimide, a metal, an oxide, a nitride, and an oxynitride. The protective layer may have a water vapor permeability of 2 × 10² g/m²/day or less. The protective layer may have a pencil hardness of B or higher.

### Advantageous Effects of Invention

According to the present disclosure, it is possible to provide a fire-extinguishing member in which the fire-extinguishing-agent-containing layer that exhibits an excellent fire-extinguishing effect is formed on the surface of the adherend even if the adherend has a complex shape such as unevenness and which can curb the spread of fire by promoting initial fire-extinguishing at the time of fire, and a method for efficiently producing the same.

### Brief Description of Drawings

FIG. 1 is a schematic cross-sectional view showing a fire-extinguishing member according to a first embodiment of the present disclosure.
(a) and (b) in FIG. 2 are schematic cross-sectional views showing examples of a surface to be treated having an uneven shape.
(a) in FIG. 3 is a schematic cross-sectional view showing a fire-extinguishing member according to a second embodiment of the present disclosure, and (b) in FIG. 3 is a schematic cross-sectional view showing a modification example of the fire-extinguishing member shown in (a) in FIG. 3.

### Description of Embodiments

Hereinafter, an embodiment of the present disclosure will be described in detail with appropriate reference to the drawings. In addition, the present invention is not limited to the following embodiment.

### <Fire-extinguishing member>

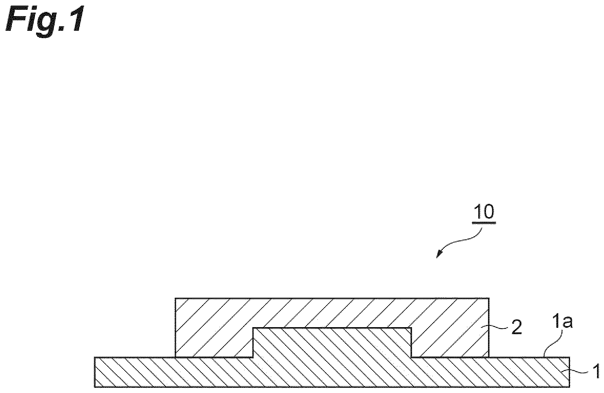

FIG. 1 is a schematic cross-sectional view of a fire-extinguishing member according to a first embodiment. A fire-extinguishing member 10 includes an adherend 1 having a surface to be treated 1a in an uneven shape and a fire-extinguishing-agent-containing layer 2 provided on the surface to be treated 1a.

### (Adherend)

The material of the adherend 1 is not particularly limited, and for example, an adherend used for construction materials, automobile members, aircraft members, electronic members, and the like can be used. Such an adherend 1 may be a resin base material, a metal, noncombustible paper, glass cloth, or the like.

Examples of the resin base material include polyolefin (LLDPE, PP, COP, CPP, or the like), polyester (PET or the like), fluororesin (PTFE, ETFE, EFEP, PFA, FEP, PCTFE, or the like), PVC, PVA, acrylic resin, epoxy resin, polyamide, polyimide, polycarbonate (PC), and the like. Of these, from the viewpoint of a low water vapor permeability and easy suppression of deterioration of a fire-extinguishing agent component, at least one of LLDPE, PP, COP, CPP, PET, PTFE, ETFE, EFEP, PFA, FEP, PCTFE, PVC, and PC may be included as the resin base material. Furthermore, by using a highly transparent material, it becomes easier to inspect the appearance of the fire-extinguishing member 10 and to confirm when it is time to replace the fire-extinguishing member 10.

Examples of the metal include aluminum, iron, copper, a stainless steel alloy thereof, duralumin, a galvanized steel sheet, and the like.

In addition to the above, the adherend 1 may contain, for example, an organic phosphorus compound (FR), an epoxy compound, an aramid compound, an amide compound, a silicon compound, carbon, an aramid compound, an amide compound, a silicon compound, a carbon fiber, or the like.

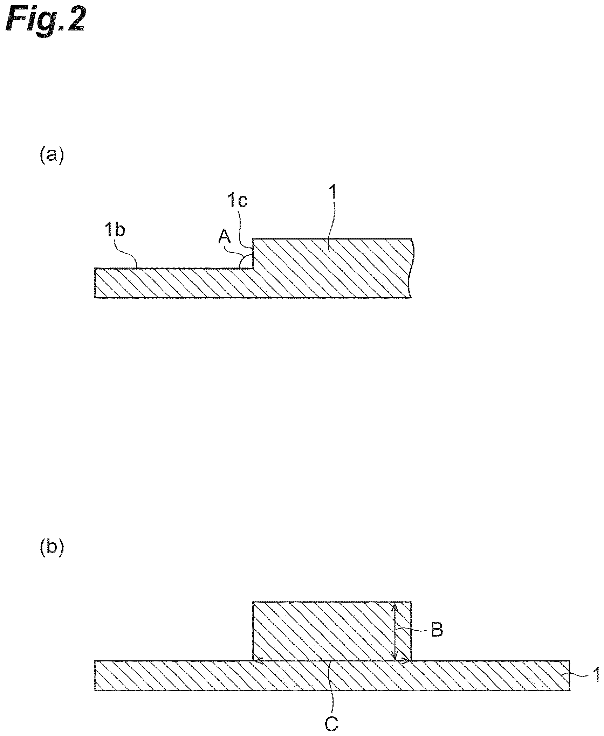

The adherend 1 has the surface to be treated 1a in an uneven shape. The surface to be treated having an uneven shape may be, for example, a surface to be treated in which a difference in height between a convex portion and a concave portion is a certain level or more, for example, a surface to be treated in which the maximum height of the uneven shape is 0.1 mm or more. Alternatively, in the surface to be treated, an angle A formed by a bottom surface 1b (a first surface) and an inclined surface 1c (a second surface) (see (a) in FIG. 2) may be 90° or more, or may be less than 90°. In the surface to be treated, a corner R (a radius of curvature) formed by the bottom surface 1b and the inclined surface 1c may be 3 mm or less, and the ratio of the maximum height B of the uneven shape to the minimum width C of the bottom surface (see (b) in FIG. 2) may be 3 or less, or may be 1 or less. The number of uneven shapes on the surface to be treated may be one or more, or may be three or more.

Even if the adherend 1 has such a surface to be treated, the fire-extinguishing-agent-containing layer, which will be described below, can be neatly provided on the adherend 1 by a wet coating method, and an aerosol fire-extinguishing agent that exhibits an excellent fire-extinguishing effect can be formed on the adherend 1.

The thickness of the adherend 1 can be appropriately selected according to the amount of heat, the impact, the allowable space, and the like at the time of fire. For example, if the adherend 1 is thick, it is easy to suppress water vapor permeation, to obtain strength and rigidity, and to facilitate handling. On the other hand, if the adherend 1 is thin, the fire-extinguishing member can be provided in a narrow space. The thickness of the adherend 1 can be, for example, 0.05 to 20 mm and may be 0.1 to 5 mm. The adherend 1 may be a stacked article of a plurality of adherends.

The adherend 1 may be an injection-molded article or a press-molded article. The adherend 1 formed by an injection molding method or a press molding method is preferable because complex uneven shapes can be produced in large quantities. The adherend may be a casing itself, or may be provided on an inner surface of a casing.

### (Fire-extinguishing-agent-containing layer)

The fire-extinguishing-agent-containing layer 2 contains a binder resin and a fire-extinguishing agent component that is combusted to generate an aerosol. The fire-extinguishing agent component includes, for example, at least an inorganic oxidizing agent and a radical-generating agent. The radical-generating agent has an effect of stabilizing a combustion radical and suppressing a chain reaction of combustion (a negative catalytic effect).

The thickness of the fire-extinguishing-agent-containing layer 2 only has to be appropriately set depending on the object to be fire-extinguished by the fire-extinguishing member 10, the installation location of the fire-extinguishing member 10, and the amount of fire-extinguishing agent component to be mixed in the fire-extinguishing member 10. The thickness of the fire-extinguishing-agent-containing layer 2 only has to be 1 mm or less, can be 30 to 1000 µm, and may be 120 to 500 µm, for example. Examples of the object to be fire-extinguished include a switch board, a distribution board, a control board, a storage battery (a lithium ion battery or the like), wallpaper for a building material, a building material such as a ceiling material, and each member of a collection box for a lithium ion battery.

The content of the fire-extinguishing agent component in the fire-extinguishing-agent-containing layer 2 (based on the mass of the fire-extinguishing-agent-containing layer 2) is, for example, 70% to 97% by mass, preferably 80% to 95% by mass, and more preferably 85% to 92% by mass. When the content of the fire-extinguishing agent component is 70% by mass or more, excellent fire-extinguishing performance can be achieved. On the other hand, when this content is 97% by mass or less, stable adhesion to the adherend 1 is obtained, and a stable coating film is formed without slipping of a fire-extinguishing agent. The amount of the fire-extinguishing agent component per unit area only has to be set depending on the object to be fire-extinguished.

### [Fire-extinguishing agent component]

As mentioned above, the fire-extinguishing agent component is combusted to generate an aerosol. The fire-extinguishing agent component includes, for example, at least an inorganic oxidizing agent and a radical-generating agent. These components will be explained below.

The inorganic oxidizing agent (hereinafter referred to as a "(A) component" in some cases) is a component that is combusted together with the binder resin to generate thermal energy. Examples of the inorganic oxidizing agent include potassium chlorate, sodium chlorate, strontium chlorate, ammonium chlorate, magnesium chlorate, and potassium perchlorate. These may be used alone or in a combination of two or more.

The radical-generating agent (hereinafter referred to as a "(B) component" in some cases) is a component for generating an aerosol (a radical) using thermal energy generated by combustion of the binder resin and the inorganic oxide. It is preferable to use a radical-generating agent having a decomposition initiation temperature in the range of 90° to 260°. Examples of the radical-generating agent include a potassium salt and a sodium salt. Examples of the potassium salt include potassium acetate, potassium propionate, monopotassium citrate, dipotassium citrate, tripotassium citrate, monopotassium trihydrogen ethylenediaminetetraacetate, dipotassium dihydrogen ethylenediaminetetraacetate, tripotassium monohydrogen ethylenediaminetetraacetate, tetrapotassium ethylenediaminetetraacetate, potassium hydrogen phthalate, dipotassium phthalate, potassium hydrogen oxalate, dipotassium oxalate, and potassium bicarbonate. Examples of the sodium salts include sodium acetate, sodium citrate, and sodium bicarbonate. These may be used alone or in a combination of two or more.

The content of the (A) component is, for example, 10 to 60 parts by mass, preferably 20 to 50 parts by mass, and more preferably 35 to 45 parts by mass with respect to 100 parts by mass of the total amount of the (A) component and the (B) component. The content of the (B) component is, for example, 45 to 90 parts by mass, preferably 50 to 80 parts by mass, and more preferably 55 to 65 parts by mass with respect to 100 parts by mass of the total amount of the (A) component and the (B) component.

A commercially available product may be used as the fire-extinguishing agent component to be mixed into the fire-extinguishing-agent-containing layer 2. Examples of the commercially available fire-extinguishing agent component include K-1 (trade name, manufactured by Yamato Protech Co., Ltd.) and STAT-X (trade name, manufactured by Nippon Koki Co., Ltd.).

### [Binder resin]

A thermoplastic resin and a thermosetting resin can be used as the binder resin. Examples of the thermoplastic resin include polyolefin resins such as polypropylene resins, polyethylene resins, poly(1-)butene resins, and polypentene resins, polystyrene resins, acrylonitrile-butadiene-styrene resins, methyl methacrylate-butadiene-styrene resins, an ethylene-vinyl acetate resin, an ethylene-propylene resin, polycarbonate resins, polyphenylene ether resins, acrylic resins, polyamide resins, polyvinyl chloride resins, and the like. Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polyvulcanized rubber (T), silicone rubber (Q), fluororubber (FKM, FZ), and urethane rubber (U), a polyurethane resin, a polyisocyanate resin, a polyisocyanurate resin, a phenol resin, an epoxy resin, and the like. The binder resin may contain a curing agent component.

The epoxy resin is suitable as the binder resin because it has excellent compatibility with the fire-extinguishing agent component, is soluble in an alcohol solvent, which will described below, and has high stability. Since the epoxy resin has excellent compatibility with the potassium salt and the sodium salt (the radical-generating agent), it is easy to obtain a fire-extinguishing-agent-containing layer having a uniform thickness. In addition, since the epoxy resin does not undergo hydrolysis or embrittlement due to moist heat, the fire-extinguishing-agent-containing layer that contains the epoxy resin as the binder resin has excellent stability. Furthermore, during combustion of the fire-extinguishing-agent-containing layer, thermal decomposition begins at about 260°C to 350°C, making it possible to generate an aerosol without impairing fire-extinguishing performance.

It is preferable to use a binder resin having water vapor barrier properties. Preferably, the binder resin is capable of achieving a water vapor permeability of 5 × 10³ g/m²/day or less and more preferably 5 × 10² g/m²/day or less when a single layer film made from the binder resin is prepared (under 40°C/90% RH conditions in accordance with JIS K 7129). Examples of a commercially available product of such a binder resin include Maxive (trade name, manufactured by Mitsubishi Gas Chemical Company, Inc.).

The content of the binder resin based on the total amount of the fire-extinguishing-agent-containing layer 2 is, for example, 3% to 30% by mass, preferably 5% to 20% by mass, and more preferably 8% to 15% by mass. When the content of the binder resin is 3% by mass or more, excellent moldability can be achieved, and on the other hand, when the content of the binder resin is 30% by mass or less, excellent fire-extinguishing performance can be achieved.

### [Other components]

Other components in addition to the components mentioned above may be mixed into the fire-extinguishing-agent-containing layer 2. Examples of the other components include a dispersant such as water, a solvent, a colorant, an antioxidant, a flame retardant, an inorganic filler, and an adhesive. These components only have to be appropriately selected depending on the composition of the fire-extinguishing-agent-containing layer 2 and the type of the binder resin. The content of the other components in the fire-extinguishing-agent-containing layer 2 (based on the mass of the fire-extinguishing-agent-containing layer 2) is, for example, 10% by mass or less.

### <Method for producing fire-extinguishing member>

A method for producing the fire-extinguishing member 10 includes a step of preparing the adherend 1 that has the surface to be treated 1a in an uneven shape and a method of forming the fire-extinguishing-agent-containing layer 2 that includes the binder resin and the fire-extinguishing agent component that is combusted to generate an aerosol on the surface to be treated 1a by a wet coating method.

The wet coating method is, for example, a method of preparing a coating liquid containing a binder resin and a fire-extinguishing agent component that is combusted to generate an aerosol and forming a film on the surface to be treated 1a. The coating liquid may contain, for example, an alcohol solvent or the like. Examples of the wet coating method include a spray coating method, a dip coating method, a curtain coating method, a spin coating method, a sponge roll method, coating with a brush, and the like. Among these, the spray coating method and the dip coating method are preferred.

The spray coating method is a method of applying a coating liquid to the adherend 1 in the form of a mist using a spray coater. It is preferable that the spray type and the nozzle specifications be appropriately selected depending on the uneven shape of the surface to be treated 1a, the solvent contained in the coating liquid, the thickness of the fire-extinguishing-agent-containing layer, the tact time, and the cost of equipment. Examples of the nozzle specifications include a single fluid nozzle (since the single fluid nozzle copes with spray patterns (flat, straight flow, full cone, hollow cone, fine spray, oval, square) and spray angles (0° to 170°), it is possible to reliably cover a target range), a two fluid spray (as a spray nozzle that pulverizes and atomizes a liquid with high-speed airflow such as compressed air, allowing for a wide range of adjustment of the nozzle to best suit the required application and conditions, such as fine mist and fog), and the like. In addition, as for the spray type, for example, a full cone spray type is preferred to generate a pattern constituted by medium particles to large particles on a circular front surface, and it is preferable to use two fluid air atomizing spray type in which a dense film can be formed because fine spray can be performed in a wide flow rate range. In particular, in a case where the solvent is an alcohol-based solvent, the adherend 1 is preferably made of a material that satisfies the solvent resistance and the explosion-proof specifications. It is preferable to design a desired thickness according to the object to be fire-extinguished and to appropriately select the solid content, the viscosity, and the pulling-up speed from the viewpoint of the stability between the thickness and the fire-extinguishing-agent-containing layer 2. The solid content can be, for example, 15% to 60%. If the solid content and the viscosity are high, a large thickness can be obtained with a single spray, but the required pressure is high and a risk of clogging increases. Furthermore, if a large thickness is obtained at once, there is a risk that bumping will occur during drying and unevenness will occur on the film surface. From this point of view, the solid content is preferably 30% to 50%.

The dip coating method is a method in which the adherend is vertically immersed in a liquid (a coating liquid) and is pulled up while adjusting the force and the speed due to the viscous force, the surface tension, and the weight of the liquid, wherein the pulling-up speed of the adherend 1 is controlled by the relationship between the viscosity of the liquid and the gravity of the flowing-down coating liquid adhering to the adherend. It is preferable to design a desired thickness according to the object to be fire-extinguished and to appropriately select the solid content, the viscosity, and the pulling-up speed from the viewpoint of the stability between the thickness and the fire-extinguishing-agent-containing layer 2. The solid content can be, for example, 15% to 60% by mass. If the solid content and the viscosity are high, a large thickness can be obtained, but there is a risk that thickening is likely to occur, bumping is likely to occur during drying, and unevenness will occur on the film surface. From this point of view, the solid content is preferably 20% to 50% by mass and more preferably 30% to 50% by mass.

According to the production method according to the present embodiment, even if the adherend has a complicated shape such as unevenness, the layer containing the aerosol fire-extinguishing agent that exhibits an excellent fire-extinguishing effect is formed on the surface of the adherend to promote initial fire-extinguishing at the time of fire.

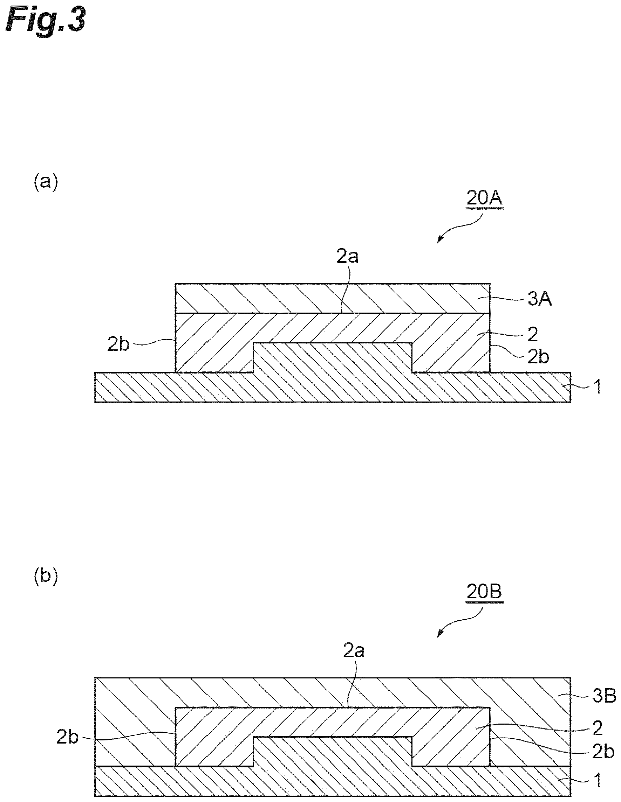

Although the embodiment of the present disclosure has been described above in detail, the present invention is not limited to the above embodiment. For example, in the embodiment described above, an aspect in which only the fire-extinguishing-agent-containing layer 2 is formed on the surface of the adherend 1 is illustrated, but the fire-extinguishing member may include other layers. (a) in FIG. 3 is a schematic cross-sectional view showing a fire-extinguishing member according to a second embodiment, and (b) in FIG. 3 is a schematic cross-sectional view showing a modification example of the fire-extinguishing member shown in (a) in FIG. 3.

A fire-extinguishing member 20A shown in (a) in FIG. 3 includes an adherend 1 having a surface to be treated 1a in an uneven shape, a fire-extinguishing-agent-containing layer 2 provided on the surface to be treated 1a, and a protective layer 3A provided on the surface of the fire-extinguishing-agent-containing layer 2. The protective layer 3A is provided on a part of the surface of the fire-extinguishing-agent-containing layer 2. That is, the protective layer 3A covers a main surface 2a of the fire-extinguishing-agent-containing layer 2, while the protective layer 3A does not cover a side surface 2b of the protective layer 3A. A fire-extinguishing member 20B shown in (b) in FIG. 3 includes an adherend 1, a fire-extinguishing-agent-containing layer 2, and a protective layer 3B provided to cover the entire surface of the fire-extinguishing-agent-containing layer 2. The protective layer 3B covers a main surface 2a and a side surface 2b of the fire-extinguishing-agent-containing layer 2.

### (Protective layer)

The material of the protective layer 3A, 3B is not particularly limited, and for example, a protective layer used for construction materials, automobile members, aircraft members, electronic members, and the like can be used. By providing the protective layer on the surface of the fire-extinguishing-agent-containing layer, it is possible to suppress the corrosion surrounding metals by alkaline water due to deliquescence of the fire-extinguishing-agent-containing layer during transportation of the fire-extinguishing member, during processing of the fire-extinguishing member, and during long-term storage of products using the fire-extinguishing member. Moreover, the fire-extinguishing speed can be maintained.

Examples of the material of the protective layer 3A, 3B include polyolefin, polyester, fluororesin, polyvinyl chloride, polyvinyl alcohol, acrylic resin, epoxy resin, polyamide, polyimide, a metal, an oxide, a nitride, an oxynitride, and the like.

The protective layers 3A and 3B may have a water vapor permeability of 2 × 10² g/m²/day or less. When the water vapor permeability is 2 × 10² g/m²/day or less, it is possible to further suppress the corrosion of surrounding metals by alkaline water due to the deliquescence of the fire-extinguishing-agent-containing layer during transportation of the fire-extinguishing member, during processing of the fire-extinguishing member, and during long-term storage of products using the fire-extinguishing member. Further, when the water vapor permeability is 2 × 10² g/m²/day or less, the fire-extinguishing speed can be maintained. From this point of view, it is preferable that the water vapor permeability of the protective layer 3A, 3B be 2 × 10¹ g/m²/day or less. The water vapor permeability of the protective layer 3A, 3B is a value measured under 40°C/90% RH conditions in accordance with JIS K71.

The protective layer 3A, 3B may have a pencil hardness of B or higher. When the pencil hardness is B or higher, it is possible to suppress the deliquescence of the fire-extinguishing-agent-containing layer due to the exposure of the fire-extinguishing-agent-containing layer caused by the cracking or the scratching of the protective layer during transportation of the fire-extinguishing member, during processing of the fire-extinguishing member, and during long-term storage of products using the fire-extinguishing member. From this point of view, it is preferable that the pencil hardness of the protective layer 3A, 3B be F or higher. The pencil hardness of the protective layer 3A, 3B refers to a value obtained by measuring a scratch hardness (a pencil method) in accordance with JIS K 5600.

The thickness of the protective layer 3A, 3B is not particularly limited and only has to be appropriately set depending on the object to be fire-extinguished by the fire-extinguishing member, the installation location of the fire-extinguishing member, and the amount of fire-extinguishing agent component to be mixed in the fire-extinguishing member. The thickness of the protective layer 3A, 3B only has to be 1 to 1000 µm and may be 20 to 300 µm, for example.

A method for producing the fire-extinguishing member 20A, 20B includes a steps of preparing the adherend 1 that has the surface to be treated in an uneven shape, a step of forming the fire-extinguishing-agent-containing layer 2 on the surface to be treated, and a step of forming the protective layer 3A, 3B on the fire-extinguishing-agent-containing layer 2, and at least one of the fire-extinguishing-agent-containing layer 2 and the protective layer 3A, 3B is formed by a wet coating method. The fire-extinguishing-agent-containing layer 2 only has to be formed by a wet coating method as in the first embodiment.

The protective layer 3A is formed to cover the main surface 2a of the fire-extinguishing-agent-containing layer 2. The protective layer 3B is formed to cover the main surface 2a and the side surface 2b of the fire-extinguishing-agent-containing layer 2. The protective layer 3A, 3B only has to be formed by a wet coating method in the same manner as the formation of the fire-extinguishing-agent-containing layer 2, except that the coating liquid used is different. That is, for the protective layer 3A, 3B, a film only has to be formed on the fire-extinguishing-agent-containing layer 2 in a state where a coating liquid containing a material that constitutes this layer is prepared. The coating liquid may contain, for example, an alcohol solvent or the like. Examples of the wet coating method include a spray coating method, a dip coating method, a curtain coating method, a spin coating method, a sponge roll method, coating with a brush, and the like. Among these, the spray coating method and the dip coating method are preferred. It is preferable that the spray type and the nozzle specifications be appropriately selected depending on the uneven shape of the fire-extinguishing-agent-containing layer 2, the solvent contained in the coating liquid, the thickness of the fire-extinguishing-agent-containing layer 2, the tact time, and the cost of equipment. In a case where the solvent contained in the coating liquid is an alcohol-based solvent, the fire-extinguishing-agent-containing layer 2 is preferably made of a material that satisfies the solvent resistance and the explosion-proof specifications. It is preferable to design a desired thickness according to the object to be fire-extinguished and to appropriately select the solid content, the viscosity, and the pulling-up speed from the viewpoint of the stability between the thickness and the protective layer 3A, 3B. The solid content can be, for example, 15% to 60%. If the solid content and the viscosity are high, a large thickness can be obtained with a single spray, but the required pressure is high and a risk of clogging increases. Furthermore, if a large thickness is obtained at once, there is a risk that bumping will occur during drying and unevenness will occur on the film surface. From this point of view, the solid content is preferably 30% to 50%.

The dip coating method is a method in which the adherend 1 on which the fire-extinguishing-agent-containing layer 2 has been formed is vertically immersed in a liquid (a coating liquid) and is pulled up while adjusting the force and the speed due to the viscous force, the surface tension, and the weight of the liquid, wherein the pulling-up speed is controlled by the relationship between the viscosity of the liquid and the gravity of the flowing-down coating liquid adhering to the fire-extinguishing-agent-containing layer 2. It is preferable to design a desired thickness according to the object to be fire-extinguished and to appropriately select the solid content, the viscosity, and the pulling-up speed from the viewpoint of the stability between the thickness and the protective layer 3A, 3B. The solid content can be, for example, 15% to 60% by mass. If the solid content and the viscosity are high, a large thickness can be obtained, but there is a risk that thickening is likely to occur, bumping is likely to occur during drying, and unevenness will occur on the film surface. From this point of view, the solid content is preferably 20% to 50% by mass and more preferably 30% to 50% by mass.

According to the production method according to the present embodiment, even if the adherend has a complicated shape such as unevenness, or the adherend or the fire-extinguishing-agent-containing layer has a complicated shape such as unevenness, the layer containing the aerosol fire-extinguishing agent that exhibits an excellent fire-extinguishing effect is formed on the surface of the adherend. Moreover, the protective layer can be efficiently formed on the surface of the fire-extinguishing-agent-containing layer 2. According to the fire-extinguishing member 20A, 20B, it is possible to promote initial fire-extinguishing at the time of fire.

### [Examples]

Hereinafter, the present disclosure will be described in more detail with reference to examples, but the present invention is not limited to these examples.

### [Examples 1-1 to 1-32 and Comparative Examples 1-1 to 1-3]

PC-FR (40) (manufactured by Idemitsu Kosan Co., Ltd., AK3020, thickness 100 µm) was prepared as an adherend. An uneven shape was provided on this adherend. Details of the uneven shape are shown in Tables 1 to 5.

On the other hand, a slurry for the fire-extinguishing-agent-containing layer obtained by adding an aerosol fire-extinguishing agent (product name: K-1, ethanol slurry, manufactured by Yamato Protech Co., Ltd.) and a binder resin (product name: AD393 and CAT-EP5, manufactured by Toyo Ink Co., Ltd.) to isopropyl alcohol was prepared, and the mass ratio of the binder resin to the aerosol fire-extinguishing agent was adjusted to 10 (binder resin/aerosol fire-extinguishing agent = 10).

The slurry for the fire-extinguishing-agent-containing layer was applied to the adherend prepared above in the types shown in Tables 1 to 5, was applied at the drying temperature 90°C for 1 minute such that the total solid content was the values shown in Tables 1 to 5, and was applied such that the total thickness of the fire-extinguishing-agent-containing layer was 200 µm. In this way, the fire-extinguishing members shown in Tables 1 to 5 below were produced.

In Comparative Examples 1-2 and 1-3, a fire-extinguishing sheet (manufactured by SAIKYO, thickness 3 mm) was used as the fire-extinguishing-agent-containing layer.

### [Evaluation of fire-extinguishing member]

### (Separation between adherend and fire-extinguishing-agent-containing layer)

Separation between the adherend and the fire-extinguishing-agent-containing layer was visually observed. In Tables 1 to 5, a case in which no separation was observed was indicated as "absent," and a case in which separation was observed was indicated as "present."

### (Fire-extinguishing test)

### <Candle fire-extinguishing properties>

The fire-extinguishing members of the examples and the comparative examples were each cut into a size of 20 mm (length) × 20 mm (width) to obtain samples. The sample was brought close to the candle flame to a height of 20 mm while the sample was held with tweezers. In this way, after the sample was combusted, it was observed whether or not the fire could be extinguished, and the time required for extinguishing the fire was measured.

### <Fire-extinguishing properties for 1 g of solid fuel>

The fire-extinguishing members of the examples and the comparative examples were each cut into a size of 20 mm (length) × 20 mm (width) to obtain samples. After 1 g of solid fuel was disposed in a pan installed inside an aluminum container, the solid fuel was ignited to generate a flame. The sample was brought close to the flaming solid fuel to a height of 20 mm while the sample was held with tweezers. In this way, after the sample was combusted, it was observed whether or not the fire could be extinguished, and the time required for extinguishing the fire was measured.

**[Table 1]**

| | | | Example 1-1 | Example 1-2 | Example 1-3 | Example 1-4 | Example 1-5 | Example 1-6 | Example 1-7 | Example 1-8 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 20 | 20 | 20 | 20 | 20 | 20 | 20 | 20 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 3 | 3 | 3 | 3 | 3 | 3 | 3 | 3 |
| | Thickness (µm) | | 200 | 200 | 200 | 200 | 200 | 200 | 200 | 200 |
| Application type of fire-extinguishing-agent-containing layer | | | Spray (full cone spray) single fluid | | | | | | | |
| Separation between adherend and fire-extinguishing-agent-containing layer | | | Absent | Absent | Absent | Absent | Absent | Absent | Absent | Absent |
| Candle fire-extinguishing properties | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| Fire-extinguishing properties for 1 g of solid fuel | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |

**[Table 2]**

| | | | Example 1-9 | Example 1-10 | Example 1-11 | Example 1-12 | Example 1-13 | Example 1-14 | Example 1-15 | Example 1-16 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Spray (air atomizing spray) two fluid | | | | | | | |
| Separation between adherend and fire-extinguishing-agent-containing layer | | | Absent | Absent | Absent | Absent | Absent | Absent | Absent | Absent |
| Candle fire-extinguishing properties | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| Fire-extinguishing properties for 1 g of solid fuel | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |

**[Table 3]**

| | | | Example 1-17 | Example 1-18 | Example 1-19 | Example 1-20 | Example 1-21 | Example 1-22 | Example 1-23 | Example 1-24 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Dip coating Pulling-up speed of adherend (1 m/min) | | | | | | | |
| Separation between adherend and fire-extinguishing-agent-containing layer | | | Absent | Absent | Absent | Absent | Absent | Absent | Absent | Absent |
| Candle fire-extinguishing properties | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| Fire-extinguishing properties for 1 g of solid fuel | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |

**[Table 4]**

| | | | Example 1-25 | Example 1-26 | Example 1-27 | Example 1-28 | Example 1-29 | Example 1-30 | Example 1-31 | Example 1-32 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Dip coating Pulling-up speed of adherend (2 m/min) | | | | | | | |
| Separation between adherend and fire-extinguishing-agent-containing layer | | | Absent | Absent | Absent | Absent | Absent | Absent | Absent | Absent |
| Candle fire-extinguishing properties | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| Fire-extinguishing properties for 1 g of solid fuel | | | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |

**[Table 5]**

| | | | Comparative Example 1-1 | Comparative Example 1-2 | Comparative Example 1-3 |
|---|---|---|---|---|---|
| Adherend | Trade name | | PC-FR (40) | PC-FR (40) | PC-FR (40) |
| | Thickness (mm) | | 0.1 | 0.1 | 0.1 |
| | Uneven shape | Maximum height (mm) | 0.1 | 0.1 | 5 |
| | | Angle formed between bottom surface and inclined surface (°) | 120 | 120 | 90 |
| | | Maximum height / minimum width of bottom surface | 3 | 3 | 3 |
| | | Corner R (mm) | - | - | 2 |
| | | The number of uneven shapes | 1 | 1 | 6 |
| Fire-extinguishing-agent-containing layer | | | Absent | Fire-extinguishing sheet | |
| | | | | manufactured by SAIKYO, thickness 3 mm | |
| Separation between adherend and fire-extinguishing-agent-containing layer | | | Absent | Present | Present |
| Candle fire-extinguishing properties | | | Fire could not be extinguished | Fire could not be extinguished | Fire could not be extinguished |
| Fire-extinguishing properties for 1 g of solid fuel | | | Fire could not be extinguished | Fire could not be extinguished | Fire could not be extinguished |

### [Examples 2-1 to 2-24 and Comparative Examples 2-1 to 2-4]

PC-FR (40) (manufactured by Idemitsu Kosan Co., Ltd., AK3020, thickness 100 µm) was prepared as an adherend. An uneven shape was provided on this adherend. Details of the uneven shape are shown in Tables 6 to 9.

On the other hand, a slurry for the fire-extinguishing-agent-containing layer obtained by adding an aerosol fire-extinguishing agent (product name: K-1, ethanol slurry, manufactured by Yamato Protech Co., Ltd.) and a binder resin (product name: AD393 and CAT-EP5, manufactured by Toyo Ink Co., Ltd.) to isopropyl alcohol was prepared, and the mass ratio of the binder resin to the aerosol fire-extinguishing agent was adjusted to 10 (binder resin/aerosol fire-extinguishing agent = 10).

The slurry for the fire-extinguishing-agent-containing layer was applied to the adherend prepared above in the types shown in Tables 6 to 9, was applied at the drying temperature 90°C for 1 minute such that the total solid content was 42.5% by mass, and was applied such that the total thickness of the fire-extinguishing-agent-containing layer was 200 µm. Subsequently, the slurry for the protective layer was applied in the types shown in Tables 6 to 9 and was dried to produce the fire-extinguishing members shown in Tables 6 to 9. The following application liquids were used for the protective layer.

Application liquid 1 for protective layer: M-100 (manufactured by Mitsubishi Gas Chemical Co., Ltd.) 8.4% by mass, C-93 (manufactured by Toyo Ink Co., Ltd.) 26.9% by mass, methanol 20.2%, and ethyl acetate 44.5% by mass

Application liquid 2 for protective layer: KBE-04 (manufactured by Shin-Etsu Chemical Co., Ltd., TEOS) 12.53% by mass, PVA124 (manufactured by Kuraray Co., Ltd., PVA) 0.95% by mass, KBM-9659 (manufactured by Shin-Etsu Chemical Co., Ltd.) 0. 50% by mass, hydrochloric acid (0.1N) 50.47% by mass, water 22.85% by mass, methanol 7.95% by mass, and IPA 4.75% by mass

Application liquid 3 for protective layer: HP120 (manufactured by Yokohama Rubber Co., Ltd.) 12.5% by mass and toluene 87.5% by mass

### [Evaluation of fire-extinguishing member]

The obtained samples were evaluated as follows. The results are shown in Tables 10 to 13.

### <Evaluation after sample preparation>

Separation between the adherend and the fire-extinguishing-agent-containing layer was visually observed. In Tables 10 to 13, a case in which no separation was observed was indicated as "absent," and a case in which separation was observed was indicated as "present."

### <Evaluation of protective layer pencil hardness>

Using HA-301 manufactured by Tester Sangyo Co., Ltd., a pencil with each hardness was installed on the sample surface at an angle of 45° and with a load of 750 g, and the tip end of the pencil is placed on the coating film, and then the device was immediately scanned over a distance of 10 mm to move away from the operator at a speed of 1 mm/s.

### <Fire-extinguishing test>

### [Candle fire-extinguishing properties]

The fire-extinguishing members of the examples and the comparative examples were each cut into a size of 20 mm (length) × 20 mm (width) to obtain samples. The sample was brought close to the candle flame to a height of 20 mm while the sample was held with tweezers. In this way, after the sample was combusted, it was observed whether or not the fire could be extinguished, and the time required for extinguishing the fire was measured.

### [Fire-extinguishing properties for 1 g of solid fuel]

The fire-extinguishing members of the examples and the comparative examples were each cut into a size of 20 mm (length) × 20 mm (width) to obtain samples. After 1 g of solid fuel was disposed in a pan installed inside an aluminum container, the solid fuel was ignited to generate a flame. The sample was brought close to the flaming solid fuel to a height of 20 mm while the sample was held with tweezers. In this way, after the sample was combusted, it was observed whether or not the fire could be extinguished, and the time required for extinguishing the fire was measured.

### <Reliability evaluation>

The sample prepared above was placed under the conditions of 85°C and 85% RH, and after 500 hours and after 1000 hours, deliquescence and fire-extinguishing tests were conducted. The deliquescence test method was performed as follows.

### [Deliquescence]

A pH test paper manufactured by Asada Co., Ltd. was brought into contact with the sample surface to measure the pH. If the sample deliquesces, the fire-extinguishing agent becomes an aqueous solution and exhibits alkalinity with a pH of 9 or more.

**[Table 6]**

| | | | Example 2-1 | Example 2-2 | Example 2-3 | Example 2-4 | Example 2-5 | Example 2-6 | Example 2-7 | Example 2-8 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Spray (air atomizing spray) two fluid | | | | | | | |
| Protective layer | Application liquid | | 1 | 1 | 1 | 1 | 1 | 1 | 1 | 1 |
| | Material trade name | | M-100 C-93 | M-100 C-93 | M-100 C-93 | M-100 C-93 | M-100 C-93 | M-100 C-93 | M-100 C-93 | M-100 C-93 |
| | Total solid content (% by mass) | | 22.5 | 22.5 | 22.5 | 22.5 | 22.5 | 22.5 | 22.5 | 22.5 |
| | Drying temperature | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 3 | 3 | 3 | 3 | 3 | 3 | 3 | 3 |
| | Thickness (µm) | | 160 | 160 | 160 | 160 | 160 | 160 | 160 | 160 |
| Application type of protective layer | | | Spray (air atomizing spray) two fluid | | | | | | | |

**[Table 7]**

| | | | Example 2-9 | Example 2-10 | Example 2-11 | Example 2-12 | Example 2-13 | Example 2-14 | Example 2-15 | Example 2-16 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Spray (air atomizing spray) two fluid | | | | | | | |
| Protective | Application liquid | | 2 | 2 | 2 | 2 | 2 | 2 | 2 | 2 |
| layer | Material trade name | | TEOS PVA | TEOS PVA | TEOS PVA | TEOS PVA | TEOS PVA | TEOS PVA | TEOS PVA | TEOS PVA |
| | Total solid content (% by mass) | | 6.5 | 6.5 | 6.5 | 6.5 | 6.5 | 6.5 | 6.5 | 6.5 |
| | Drying temperature | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 1 | 1 | 1 | 1 | 1 | 1 | 1 | 1 |
| | Thickness (µm) | | 15.3 | 15.3 | 15.3 | 15.3 | 15.3 | 15.3 | 15.3 | 153 |
| Application type of protective layer | | | Spray (air atomizing spray) two fluid | | | | | | | |

**[Table 8]**

| | | | Example 2-17 | Example 2-18 | Example 2-19 | Example 2-20 | Example 2-21 | Example 2-22 | Example 2-23 | Example 2-24 |
|---|---|---|---|---|---|---|---|---|---|---|
| Adherend | Trade name | | PC-FR (40) | PC-FR (40) | PC-FR (40) | PC-FR (40) | PC-FR (40) | PC-FR (40) | PC-FR (40) | PC-FR (40) |
| | Thickness (mm) | | 0.1 | 0.1 | 0.1 | 0.1 | 0.1 | 0.1 | 0.1 | 0.1 |
| | Uneven shape | Maximum height (mm) | 0.1 | 5 | 5 | 5 | 5 | 5 | 5 | 5 |
| | | Angle formed between bottom surface and inclined surface (°) | 120 | 120 | 90 | 120 | 90 | 90 | 90 | 90 |
| | | Maximum height / minimum width of bottom surface | 3 | 3 | 3 | 0.5 | 0.5 | 0.5 | 0.5 | 0.5 |
| | | Corner R (mm) | - | - | - | - | - | 2 | - | 2 |
| | | The number of uneven shapes | 1 | 1 | 1 | 1 | 1 | 1 | 1 | 6 |
| Fire-extingui shing-agent-c ontaining layer | Binder resin | | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | Fire-extinguishing agent component | | K-1 slurry | K-1 slurry | K-1 slurry | K-1 slurry | K-1 slurry | K-1 slurry | K-1 slurry | K-1 slurry |
| | Binder resin / fire-extinguishing agent component | | 10 | 10 | 10 | 10 | 10 | 10 | 10 | 10 |
| | Total solid content (% by mass) | | 42.5 | 42.5 | 42.5 | 42.5 | 42.5 | 42.5 | 42.5 | 42.5 |
| | Drying temperature (°C) | | 90 | 90 | 90 | 90 | 90 | 90 | 90 | 90 |
| | Time (min) | | 1 | 1 | 1 | 1 | 1 | 1 | 1 | 1 |
| | The number of times of film formation | | 2 | 2 | 2 | 2 | 2 | 2 | 2 | 2 |
| | Thickness (µm) | | 200 | 200 | 200 | 200 | 200 | 200 | 200 | 200 |
| Application type of fire-extinguishing-agent-containing layer | | | Spray (air atomizing spray) two fluid | | | | | | | |
| Protective layer | Application liquid | | 3 | 3 | 3 | 3 | 3 | 3 | 3 | 3 |
| | Material trade name | | HR 120 | HR 120 | HR 120 | HR 120 | HR 120 | HR 120 | HR 120 | HR 120 |
| | Total solid content (% by mass) | | 5.1 | 5.1 | 5.1 | 5.1 | 5.1 | 5.1 | 5.1 | 5.1 |
| | Drying temperature (UV integrated light amount) | | 70 (1000 mJ/cm²) | 70 (1000 mJ/cm²) | 70 (1000 mJ/cm²) | 70 (1000 mJ/cm²) | 70 (1000 mJ/cm²) | 70 (1000 mJ/cm²) | 70 (1000 mJ/cm²) | 70 (1000 mJ/cm²) |
| | Time (min) | | 1 | 1 | 1 | 1 | 1 | 1 | 1 | 1 |
| | The number of times of film formation | | 1 | 1 | 1 | 1 | 1 | 1 | 1 | 1 |
| | Thickness (µm) | | 12 | 12 | 12 | 12 | 12 | 12 | 12 | 12 |
| Application type of protective layer | | | Spray (air atomizing spray) two fluid | | | | | | | |

**[Table 9]**

| | | | Comparative Example 2-1 | Comparative Example 2-2 | Comparative Example 2-3 | Comparative Example 2-4 |
|---|---|---|---|---|---|---|
| Adherend | Trade name | | PC-FR (40) | PC-FR (40) | PC-FR (40) | PC-FR (40) |
| | Thickness (mm) | | 0.1 | 0.1 | 0.1 | 0.1 |
| | Uneven shape | Maximum height (mm) | 0.1 | 0.1 | 5 | 5 |
| | | Angle formed between bottom surface and inclined surface (°) | 120 | 120 | 90 | 90 |
| | | Maximum height / minimum width of bottom surface | 3 | 3 | 0.5 | 0.5 |
| | | Corner R (mm) | - | - | 2 | 2 |
| | | The number of uneven shapes | 1 | 1 | 6 | 6 |
| Fire-extinguishing-agent-containing layer | | | Absent | Fire-extinguishing sheet manufactured by SAIKYO, | | |
| | | | | thickness 3 mm | | |
| Protective layer | | | Absent | Absent | Absent | Absent |

**[Table 10]**

| | | Example 2-1 | Example 2-2 | Example 2-3 | Example 2-4 | Example 2-5 | Example 2-6 | Example 2-7 | Example 2-8 |
|---|---|---|---|---|---|---|---|---|---|
| Evaluation after sample preparation | Separation between adherend and fire-extinguishing-agent-containing layer | Absent | Absent | Absent | Absent | Absent | Absent | Absent | Absent |
| | Pencil hardness of protective layer | H | H | H | H | H | H | H | H |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 ± 3 | 5 ± 3 | 5 ± 3 | 5 ± 3 | 5 ± 3 | 5 ± 3 | 5 ± 3 | 5 ± 3 |
| Evaluation under conditions of 85°C and 85% RH / after 500 hours | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 | 5 | 5 | 5 | 5 | 5 | 5 | 5 |
| Evaluation under conditions of 85°C and | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| 85% RH / after 1000 hours | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 7 ± 2 | 7 ± 2 | 7 ± 2 | 7 ± 2 | 7 ± 2 | 7 ± 2 | 7 ± 2 | 7 ± 2 |

**[Table 11]**

| | | Example 2-9 | Example 2-10 | Example 2-11 | Example 2-12 | Example 2-13 | Example 2-14 | Example 2-15 | Example 2-16 |
|---|---|---|---|---|---|---|---|---|---|
| Evaluation after sample preparation | Separation between adherend and fire-extinguishing-agent-containing layer | Absent | Absent | Absent | Absent | Absent | Absent | Absent | Absent |
| | Pencil hardness of protective layer | 3H | 3H | 3H | 3H | 3H | 3H | 3H | 3H |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 ± 3 | 5 ± 3 | 5 ± 3 | 5 ± 3 | 5 ± 3 | 5 ± 3 | 5 ± 3 | 5 ± 3 |
| Evaluation under conditions of 85°C and 85% RH / after 500 hours | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 | 5 | 5 | 5 | 5 | 5 | 5 | 5 |
| Evaluation under conditions of 85°C and 85% RH / after 1000 hours | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 | 5 | 5 | 5 | 5 | 5 | 5 | 5 |

**[Table 12]**

| | | Example 2-17 | Example 2-18 | Example 2-19 | Example 2-20 | Example 2-21 | Example 2-22 | Example 2-23 | Example 2-24 |
|---|---|---|---|---|---|---|---|---|---|
| Evaluation after sample preparation | Separation between adherend and fire-extinguishing-agent-containing layer | Absent | Absent | Absent | Absent | Absent | Absent | Absent | Absent |
| | Pencil hardness of protective layer | F | F | F | F | F | F | F | F |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 ± 3 | 5 ± 3 | 5 ± 3 | 5 ± 3 | 5 ± 3 | 5 ± 3 | 5 ± 3 | 5 ± 3 |
| Evaluation under conditions of 85°C and 85% RH / after 500 hours | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 5 | 5 | 5 | 5 | 5 | 5 | 5 | 5 |
| Evaluation under conditions of 85°C and 85% RH / after 1000 hours | Deliquescence (pH test paper) | Absent (pH 7) | Absent (pH 7) | Absent (pH 7) | Absent (pH 7) | Absent (pH 7) | Absent (pH 7) | Absent (pH 7) | Absent (pH 7) |
| | Candle fire-extinguishing properties | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing properties for 1 g of solid fuel | Fire could be extinguish ed | Fire could be extinguish ed | Fire could be extinguish ed | Fire could be extinguish ed | Fire could be extinguish ed | Fire could be extinguish ed | Fire could be extinguish ed | Fire could be extinguishe d |
| | Fire-extinguishing time (see) | 10 ± 5 | 10 ± 5 | 10 ± 5 | 10 ± 5 | 10 ± 5 | 10 ± 5 | 10 ± 5 | 10 ± 5 |

**[Table 13]**

| | | Comparative Example 2-1 | Comparative Example 2-2 | Comparative Example 2-3 | Comparative Example 2-4 |
|---|---|---|---|---|---|
| Evaluation after sample preparation | Separation between adherend and fire-extinguishing-agent-containing layer | - | Present (attaching over entire surface was | Present (attaching over entire surface was | Absent |
| | | | not possible) | not possible) | |
| | Pencil hardness of protective layer | - | F | F | 2B |
| | Candle fire-extinguishing properties | Fire could not be extinguished | Fire could not be extinguished | Fire could not be extinguished | Fire could be extinguished |
| | Fire-extinguishing properties for 1 g of solid fuel | Fire could not be extinguished | Fire could not be extinguished | Fire could not be extinguished | Fire could be extinguished |
| | Fire-extinguishing time (see) | - | - | - | 4 ± 3 |
| Evaluation under conditions of 85°C and 85% RH / after 500 hours | Deliquescence (pH test paper) | - | - | - | Present (pH 10) |
| | Candle fire-extinguishing properties | Fire could not be extinguished | Fire could not be extinguished | Fire could not be extinguished | Fire could be extinguished |
| | Fire-extinguishing properties for 1 g of solid fuel | Fire could not be extinguished | Fire could not be extinguished | Fire could not be extinguished | Fire could be extinguished |
| | Fire-extinguishing time (see) | - | - | - | 20 ± 16 |
| Evaluation under conditions of 85°C and 85% RH / after 1000 hours | Deliquescence (pH test paper) | - | - | - | Present (pH 11) |
| | Candle fire-extinguishing properties | Fire could not be extinguished | Fire could not be extinguished | Fire could not be extinguished | Fire could be extinguished |
| | Fire-extinguishing properties for 1 g of solid fuel | Fire could not be extinguished | Fire could not be extinguished | Fire could not be extinguished | Fire could be extinguished |
| | Fire-extinguishing time (see) | - | - | - | 60 ± 56 |

In a case where there is no fire-extinguishing agent, the fire could not be extinguished, and although the material manufactured by Yamato Protech Co., Ltd. could extinguish the fire, in a case where the protective layer is absent in the material, a fire-extinguishing time was significantly increased with reliability, as shown in Comparative Example 2-4.

### Reference Signs List

1 Adherend
1a Surface to be treated
1b Bottom surface
1c Inclined surface
2 Fire-extinguishing-agent-containing layer
2a Main surface
2b Side surface
3A, 3B Protective layer
10, 20A, 20B Fire-extinguishing member

## Claims

1. A method for producing a fire-extinguishing member, the method comprising steps of:
preparing an adherend that has a surface to be treated; and
forming a fire-extinguishing-agent-containing layer on the surface to be treated by a wet coating method to obtain a fire-extinguishing member that includes the adherend and the fire-extinguishing-agent-containing layer provided on the surface to be treated,
wherein the fire-extinguishing-agent-containing layer contains a binder resin and a fire-extinguishing agent component that is combusted to generate an aerosol.

2. A method for producing a fire-extinguishing member, the method comprising:
preparing an adherend that has a surface to be treated;
forming a fire-extinguishing-agent-containing layer on the surface to be treated; and
forming a protective layer on the fire-extinguishing-agent-containing layer to obtain a fire-extinguishing member that includes the adherend, the fire-extinguishing-agent-containing layer provided on the surface to be treated, and the protective layer provided on the fire-extinguishing-agent-containing layer,
wherein the fire-extinguishing-agent-containing layer contains a binder resin and a fire-extinguishing agent component that is combusted to generate an aerosol, and
wherein at least one of the fire-extinguishing-agent-containing layer and the protective layer is formed by a wet coating method.

3. The method for producing a fire-extinguishing member according to claim 1 or 2, wherein the surface to be treated has an uneven shape.

4. The method for producing a fire-extinguishing member according to any one of claims 1 to 3, wherein the wet coating method is one of a spray coating method and a dip coating method.

5. A fire-extinguishing member comprising:
an adherend having a surface to be treated; and
a fire-extinguishing-agent-containing layer provided on the surface to be treated,
wherein the fire-extinguishing-agent-containing layer contains a binder resin and a fire-extinguishing agent component that is combusted to generate an aerosol.

6. The fire-extinguishing member according to claim 5, wherein the surface to be treated has an uneven shape.

7. The fire-extinguishing member according to claim 5 or 6, further comprising a protective layer provided on a surface of the fire-extinguishing-agent-containing layer.

8. The fire-extinguishing member according to claim 7, wherein a material of the protective layer is at least one selected from the group consisting of polyolefin, polyester, fluororesin, polyvinyl chloride, polyvinyl alcohol, acrylic resin, epoxy resin, polyamide, polyimide, a metal, an oxide, a nitride, and an oxynitride.

9. The fire-extinguishing member according to claim 7 or 8, wherein the protective layer has a water vapor permeability of 2 × 10² g/m²/day or less.

10. The fire-extinguishing member according to any one of claims 7 to 9, wherein the protective layer has a pencil hardness ofB or more.

11. The fire-extinguishing member according to any one of claims 5 to 10, wherein the adherend is one of an injection-molded article and a press-molded article.
